# EUROPEAN PATENT SPECIFICATION

(11) **EP 1 220 735 B1**
(45) Date of publication and mention of the grant of the patent: **11.02.2004**
(21) Application number: 00971926.1
(22) Date of filing: 06.10.2000
(51) Int. Cl.: B23Q 3/12

(54) **A DEVICE FOR A MACHINE TOOL**
VORRICHTUNG FÜR EINE WERKZEUGMASCHINE
DISPOSITIF D'UNE MACHINE-OUTIL

(30) Priority: 12.10.1999 SE 9903654
(43) Date of publication of application: 10.07.2002
(73) Proprietor: SECO TOOLS AB; (publ), 737 82 Fagersta (SE)
(72) Inventor: RIVIERE, Bertrand, F-18000 Bourges (FR)
(74) Representative: Taquist, Lennart
(86) International application number: PCT/SE2000/001940
(87) International publication number: WO 2001/026861

(56) References cited:
- DE-A1- 3 838 451
- DE-A1- 19 739 466
- US-A- 4 436 463
- US-A- 4 818 161
- PATENT ABSTRACTS OF JAPAN & JP 62 251 037 A (TOSHIBA TUNGALOY CO LTD) 31 October 1987
- PATENT ABSTRACTS OF JAPAN & JP 62 251 036 A (TOSHIBA TUNGALOY CO LTD ET AL.) 31 October 1987

## Description

### Field of the invention

The present invention relates to a device for a machine tool according to the preamble of the appended claim 1 (see, for example, US-4 818 161-A).

### Prior art

Cone-shaped fasteners for machine tools are previously known for example through US patent No. 4,818,161. These may be developed in accordance with different standards, such as DIN-standard or ISO-standard. For example DIN-standard when it comes to DIN 2080 and DIN 69871 relates to two different cones, which are extremely close to each other regarding the dimensions of the cones. For example said cones have the same cone angle. Nevertheless these cones are not compatible with each other when it comes to handling of said cones at tool changing. In cones according to DIN 2080 the diametrically opposed recesses in the flange, at the end surface of bigger diameter, have the same depth while at DIN 69871 the corresponding recesses have different depths. Cones according to DIN 2080 are substanbally intended for manual tool changing while cones according to DIN 69871 are substantially intended for automatic tool changing.

Both DIN 2080 and DIN 69871 are found in a metric variant and an inch variant regarding the internal thread of the recess at the end of the cone of a smaller diameter.

There is also a cone which is depicted ISO 297, which substantially corresponds to the cone DIN 2080.

There is also a cone which is depicted ISO 7388, which substantially corresponds to the cone DIN 69871.

### Objects and features of the invention

A primary object of the present invention is to provide a device according to the preamble of the appended claim 1 where the cone shaped base body simply can be modified such that it can be used for at least two different DIN- or ISO-standards.

Another object of the present invention is that the cone shaped base body can be modified into metric standard or inch standard regarding the internal thread of the recess at the end of smaller diameter.

Still another object of the present invention is that cones with integral cutting tools can be utilized in more machines.

At least that primary object of the present invention is realized by means of a device, which has obtained the features of the characterizing portion of the appended independent claim 1. Preferred embodiments of the invention are defined in the dependent claims.

### Short description of the drawings

Below follows an embodiment of the invention that is described with reference to the enclosed drawings, wherein:
Fig. 1 shows a schematic overall view of a cone shaped base body as well as a number of possible variants of DIN-cones which can be achieved based on said base body,
Fig. 2 shows an end view, from the end surface of smaller diameter, of a cone according to DIN 2080,
Fig. 3 shows an end view, from the end surface of smaller diameter, of a cone according to DIN 69871, and
Fig. 4 shows a detail of a recess in a flange of the cone shaped base body, said recess carrying a screw.

### Detailed description of a preferred embodiment of the invention

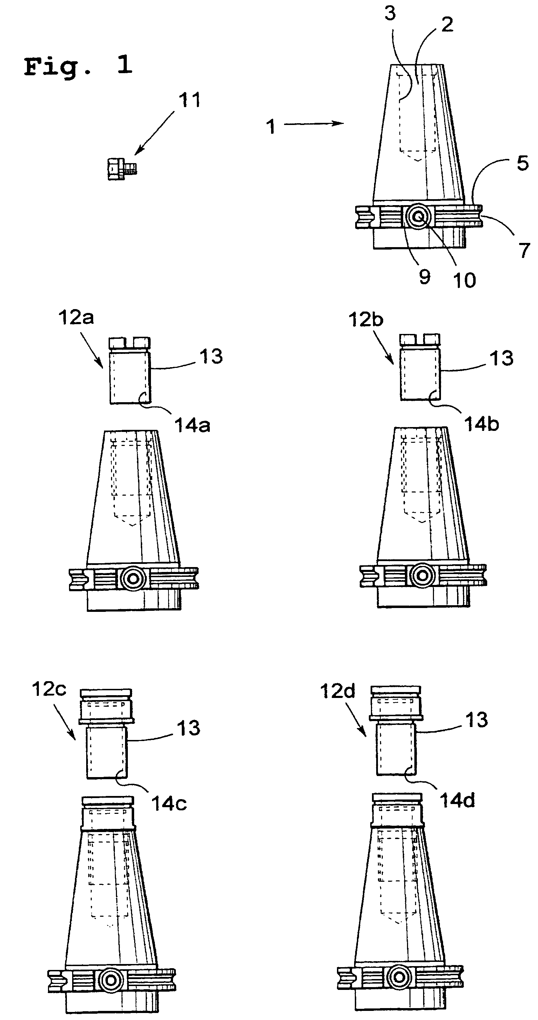

In Fig. 1 is shown a cone shaped base body 1 according to the present invention. The base body 1 at the end surface of smaller diameter is provided with a recess 2, which is provided with an internal thread 3. The base body 1 is provided with an external annular flange 5 at the area of the end surface of bigger diameter, which has an external, annular groove 7. The flange 5 also has two diametrically opposite recesses, of which only one 9 is visible in Fig. 1. A threaded hole 10 is provided in said one recess 9. The recesses in the flange 5 have the same depth. The device according to the present invention also comprises a screw 11 shown in Fig. 1, which is intended be received by the threaded hole 10.

The device according to the present invention also has a number of sleeves 12a, 12b, 12c, 12d, which all are provided with external threads 13, which fit the internal thread 3 with the recess 2 in the base body 1. The sleeves 12a-12d also have internal threads 14a, 14b, 14c, 14d. The threads 14a and 14c are identical metric threads while the threads 14b and 14d are identical English (inch) threads. The sleeves 12a and 12b go in pairs such that when either are provided in the base body 1 at the end surface of the base body 1 it will obtain a design in accordance with DIN 69871. The sleeve 12a has an internal metric thread 14a while the sleeve 12b has an internal English thread 14b. In a corresponding manner the sleeves 12c and 12d go in pairs and when either of these sleeves 12c and 12d is provided in the base body 1 it will obtain a design in accordance with DIN 2080. The sleeve 12c has an internal metric thread 14c while the sleeve 12d has an internal English thread 14d.

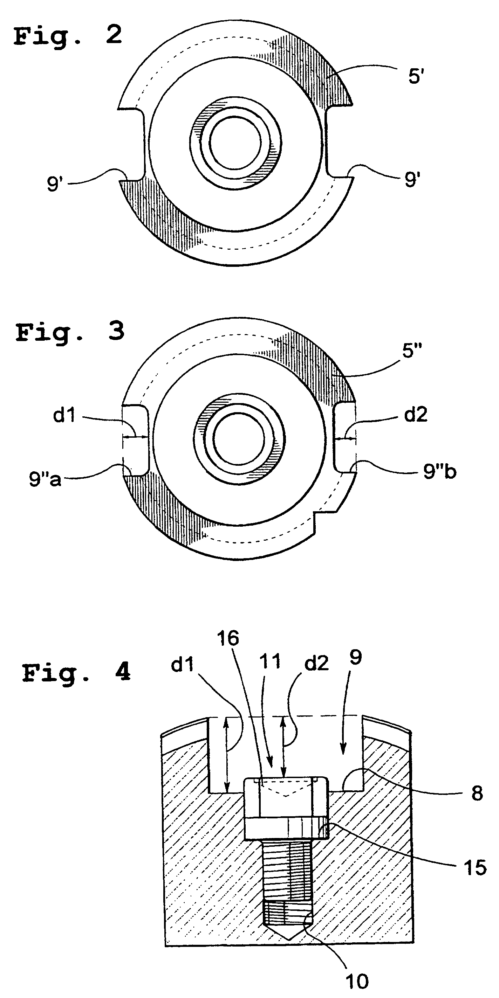

In Fig. 2 is shown an end view of a cone according to DIN 2080 while in Fig. 3 is shown an end view of a cone according to DIN 69871. Such as is illustrated in Fig. 2 the recesses 9' in the flange 5' have the same depth at a cone according to DIN 2080, which as discussed above preferably is intended for manual tool changing. Such as apparent from Fig. 3 the recesses 9"a and 9"B in the flange 5" have different depths d1 and d2, respectively, at a cone according to DIN 69871, which as discussed above preferably is intended for automatic tool changing.

In Fig. 4 a detail of the recess 9 of the base body 1 is shown. The recess 9 is provided with an internal threaded hole 10 at its bottom 8 and in Fig. 4 the screw 11 is provided in said hole 10. The screw 11 can hold an information chip. Such as is apparent from Fig. 4 the hole 10 is provided with a shoulder 15, against which the head 16 of the screw 11 abuts. By adapting the axial extension of the head 16 in relation to the distance between the bottom 8 of the recess 9 and the shoulder 15 is made sure that the free end surface of the screw 11 head projects an appropriate distance beyond the recess 9 bottom 8, to achieve a reduction of the depth of the groove 9. Consequently, by placing the screw 11 in the manner shown in Fig. 4 a transfer from a DIN 2080 cone to a DIN 69871 cone has been made, i.e. the operative depth of one recess 9' has been reduced from d1 to d2. Thereby a fool-proof orientation of the cone in the spindle is obtained as is the intention of using the cone according to DIN 69871.

### Conceivable modifications of the invention

At the embodiments of the present invention described above the screw 11 is anchored in the base body 1 by means of a thread joint. Within the limits of the present invention alternative manners of securing the screw 11 in the base body can be possible. As an exemplifying non-limiting alternative can be mentioned that said securing can made by means of a bayonet coupling.

## Claims

1. A device for a machine tool, said device comprising a cone shaped base body (1), which in the area of the end which is of bigger diameter has a flange (5), which is provided with first and second diametrically opposed recesses (9), each said recess having a bottom (8), the first and second recesses respectively forming identical first distances from the bottom (8) to an outer periphery of the flange,
**characterized in that** one of the recesses (9) includes a hole (10) and **in that** a depth-reducing element (11) is removably secured in the hole (10) such that a free end surface of the depth-reducing element (11) projects a distance beyond the bottom (8) of said one recess (9).

2. The device according to claim 1, **characterized in that** the element (11) consists of a screw, which cooperates with an internal thread of the hole (10).

3. The device according to claim 1 or 2, **characterized in that** the hole (10) is provided with a shoulder (15), and **in that** the element (11) is provided with a head (16), which is intended to cooperate with the shoulder (15).

4. The device according to anyone of the preceding claims, **characterized in that** the base body (1), at the end which is of smaller diameter, is provided with a recess (2).

5. The device according to claim 4, **characterized in that** the recess (2) is provided with an internal thread (3), and **in that** a sleeve (12a-12d) forming part of the device, which is provided with an external thread, is intended to be received in said recess (2).

6. The device according to claim 5, **characterized in that** the sleeve (12a; 12c) has an internal metric thread (14a; 14c).

7. The device according to claim 5, **characterized in that** the sleeve (12b; 12d) has an internal English thread (14b; 14d).

## Patentansprüche

1. Vorrichtung für eine Werkzeugmaschine mit einem konusförmigen Grundkörper (1), der im Bereich des Endes mit größerem Durchmesser einen Flansch (5) hat, welcher mit ersten und zweiten diametral gegenüberliegenden Ausnehmungen (9) versehen ist, deren jede einen Boden (8) hat und die identische erste Abstände vom Boden (8) zu einem äußeren Umfang des Flansches bilden, **dadurch gekennzeichnet, daß** eine der Ausnehmung (9) ein Loch (10) aufweist und daß ein die Tiefe reduzierendes Element (11) entfembar in dem Loch (10) derart angebracht ist, daß eine freie Endoberfläche des die Tiefe reduzierenden Elements (10) um einen Abstand über den Boden (8) der einen Ausnehmung (9) hinaus vorsteht.

2. Vorrichtung nach Anspruch 1, **dadurch gekennzeichnet, daß** das Element (11) aus einer Schraube besteht, die mit einem Innengewinde des Loches (11) zusammenwirkt.

3. Vorrichtung nach Anspruch 1 oder 2, **dadurch gekennzeichnet, daß** das Loch (10) mit einer Schulter (15) versehen ist und das Element (11) mit einem Kopf (16) versehen ist, der mit der Schulter (15) zusammenwirken soll.

4. Vorrichtung nach einem der vorhergehenden Ansprüche; **dadurch gekennzeichnet, daß** der Grundkörper (1) an dem Ende mit kleinerem Durchmesser mit einer Ausnehmung (2) versehen ist.

5. Vorrichtung nach Anspruch 4, **dadurch gekennzeichnet, daß** die Ausnehmung (2) mit einem Innengewinde (3) versehen ist und daß eine Hülse (12a - 12d), welche Teil der Vorrichtung bildet und mit einem Außengewinde versehen ist, vorgesehen ist, um in der Ausnehmung (2) aufgenommen zu werden.

6. Vorrichtung nach Anspruch 5, **dadurch gekennzeichnet, daß** die Hülse (12a; 12c) ein metrisches Innengewinde (14a; 14c) hat.

7. Vorrichtung nach Anspruch 5, **dadurch gekennzeichnet, daß** die Hülse (12b; 12d) ein englisches Innengewinde (14b; 14d) hat.

## Revendications

1. Dispositif pour machine-outil, ledit dispositif comprenant un corps de base en forme de cône (1), qui, dans la zone de l'extrémité qui est de plus grand diamètre comprend une bride (5) qui est munie de premier et second évidements diamétralement opposés (9), chaque dit évidement comprenant un fond (8), les premier et second évidements formant respectivement des premières distances identiques depuis le fond (8) vers une périphérie extérieure de la bride,
**caractérisé en ce que** l'un des évidements (9) comprend un trou (10) et **en ce qu'**un élément de réduction de profondeur (11) est fixé de manière amovible dans le trou (10) de sorte qu'une surface d'extrémité libre de l'élément de réduction de profondeur (11) dépasse d'une certaine distance au-delà du fond (8) dudit un évidement (9).

2. Dispositif selon la revendication 1, **caractérisé en ce que** l'élément (11) est constitué d'une vis qui coopère avec un filetage interne du trou (10).

3. Dispositif selon la revendication 1 ou 2, **caractérisé en ce que** le trou (10) est muni d'un épaulement (15) et **en ce que** l'élément (11) est muni d'une tête (16) qui a pour but de coopérer avec l'épaulement (15).

4. Dispositif selon l'une quelconque des revendications précédentes, **caractérisé en ce que** le corps de base (1), au niveau de l'extrémité qui est de plus petit diamètre, est muni d'un évidement (2).

5. Dispositif selon la revendication 4, **caractérisé en ce que** l'évidement (2) est muni d'un filetage interne (3) et **en ce qu'**un manchon (12a à 12d) faisant partie du dispositif, qui est muni d'un filetage externe, est prévu d'être reçu dans ledit évidement (2).

6. Dispositif selon la revendication 5, **caractérisé en ce que** le manchon (12a ; 12c) présente un filetage interne métrique (14a ; 14c).

7. Dispositif selon la revendication 5, **caractérisé en ce que** le manchon (12b ; 12d) présente un filetage interne au pas anglais (14b ; 14d).
